Europäisches Patentamt

European Patent Office

Office européen des brevets

(11) Numéro de publication : **0 336 838 B1**

# (12) FASCICULE DE BREVET EUROPEEN

(45) Date de publication du fascicule du brevet :
**02.12.92 Bulletin 92/49**

(51) Int. Cl.⁵ : **B24B 13/06**

(21) Numéro de dépôt : **89400932.3**

(22) Date de dépôt : **05.04.89**

(54) **Procédé et dispositif de polissage d'un composant optique.**

(30) Priorité : **06.04.88 FR 8804519**

(43) Date de publication de la demande :
**11.10.89 Bulletin 89/41**

(45) Mention de la délivrance du brevet :
**02.12.92 Bulletin 92/49**

(84) Etats contractants désignés :
**AT BE CH DE ES FR GB GR IT LI LU NL SE**

(56) Documents cités :
**DE-A- 1 938 004**
**FR-A- 2 365 409**
**FR-A- 2 448 417**
**US-A- 3 769 762**
**APPLIED OPTICS, vol. 21, no. 3, 1 février 1982, pages 561-564, Optical Society of America, New York, US; R.A. JONES:"Segmented mirror polishing experiment"**

(56) Documents cités :
**OPTICAL ENGINEERING, vol. 22, no. 2, mars-avril 1983, pages 236-240, Society of Photo-Optical Instrumentation Engineers,Bellingham, Washington, US; R.A. JONES: "Computer-controlled polishing of telescope mirror segments"**
**APPLIED OPTICS, vol. 26, no. 12, 15 juin 1987, pages 2421-2486, Optical Society of America, New York, US; G. DOUGHTY et al.:"Microcomputer-controlled polishing machine for very smooth and deep aspherical surfaces"**
**N.T.I.S. TECH NOTES, no. 12, partie F, décembre 1985, page 1375, Springfield, Virginia, US; "Programed optical surfacingequipment"**

(73) Titulaire : **BERTIN & CIE**
**Zone Industrielle Boîte postale 3**
**F-78373 Plaisir Cédex (FR)**

(72) Inventeur : **Volat, Jean-Pierre**
**29 Rue Irma Moreau**
**F-13100 Aix-en-Provence (FR)**

(74) Mandataire : **Ramey, Daniel et al**
**Cabinet Ores 6 Avenue de Messine**
**F-75008 Paris (FR)**

EP 0 336 838 B1

Jouve, 18, rue Saint-Denis, 75001 PARIS

## Description

L'invention concerne un procédé et un dispositif de polissage d'un composant optique.

La technique de fabrication des composants optiques du type lentille ou miroir comporte des opérations successives d'ébauche, de doucissage et de polissage. La réalisation de l'ébauche se fait par usinage, au moyen d'un outil diamanté en forme de cloche. Le doucissage et le polissage sont réalisés à l'aide d'un polissoir et d'un abrasif. Le doucissage est une opération de dégrossissage relativement aisée et rapide, mais le polissage est une opération très longue, coûteuse et dont dépend toute la qualité optique du composant.

Actuellement, le polissage est caractérisé à la fois par la rusticité et l'ancienneté des machines utilisées, et par la subtilité du savoir-faire artisanal du personnel spécialisé chargé de cette opération. Les machines traditionnelles de polissage comprennent essentiellement un tour à axe vertical de rotation, sur lequel est fixé le composant à polir, un polissoir en contact avec la surface à polir du composant, ce polissoir étant supporté en son centre par une rotule et entraîné en mouvement orbital avec une force d'appui sur la surface à polir, et des moyens mécaniques à bielle et manivelle de positionnement du polissoir et de génération de son mouvement.

Le procédé de polissage consiste à interposer un abrasif pulvérulent, de granulométrie déterminée, et un liquide de mouillage entre le polissoir et le composant à polir. L'alimentation en abrasif, le type de polissoir, son diamètre, sa pression d'appui, les réglages de position, d'amplitude et de vitesse de ses mouvements orbitaux, ainsi que la rotation du tour constituent les paramètres de polissage. Il est nécessaire de procéder avec d'autant plus de prudence que l'on ne maîtrise pas précisément la localisation et l'amplitude des opérations de polissage. On procède donc, au cours du polissage, à une alternance d'opérations de contrôle et d'enlèvement très limité de matière. En effet, un enlèvement excessif de matière en un point particulier, avec dépassement de la cote vers laquelle convergeaient les opérations successives de polissage, nécessite une reprise de toute la surface du composant optique. Ce risque est permanent et, chaque fois qu'il se produit, il entraîne une augmentation importante du coût.

Pour éviter ces inconvénients, le personnel spécialisé procède donc à un grand nombre d'opérations de contrôle, entre lesquelles sont réalisées des opérations de polissage qui n'enlèvent à chaque fois qu'une petite partie des défauts de surface (par excès) à corriger. Il en résulte par exemple que le polissage d'un miroir d'un diamètre de 600 mm, avec une précision du 1/8 de la longueur d'onde, nécessite environ 400 heures de machine et 150 heures de personnel spécialisé. Dans la seule période de finition (qui dure de 10 à 15 jours), deux à trois contrôles de l'état de surface du composant sont nécessaires chaque jour. Il faut environ 40 opérations successives de polissage pour faire passer l'amplitude des défauts de surface de 5 microns au 1/8 de la longueur d'onde.

La multiplication des opérations élémentaires de polissage tient à la limitation volontaire de leur efficacité à environ 10%, chaque opération élémentaire laissant environ 90% de l'amplitude des défauts à traiter. Il est clair que si l'on pouvait améliorer sans risques cette efficacité, on réduirait considérablement le nombre des opérations nécessaires de polissage des composants optiques, et donc le prix de revient.

Corollairement, la maîtrise des conditions de polissage permettrait une automatisation de ces opérations. L'invention a notamment pour objet un procédé et un dispositif de polissage de composants optiques, qui répondent à ces besoins.

L'invention propose donc un procédé de polissage d'un composant optique au moyen d'un polissoir monté sur un support de guidage et de génération de mouvement, pour entraîner le polissoir en rotation autour de son axe et pour déplacer l'axe de rotation du polissoir, caractérisé en ce que pour rendre le polissoir et son support insensibles aux réactions perturbatrices à l'interface entre le polissoir et le composant optique et uniformiser l'action du polissoir sur le composant optique, il consiste à relier le polissoir au support par des moyens de suspension pneumatique et à monter le polissoir en pivotement sur ces moyens de suspension autour d'un point qui coïncide sensiblement avec le point d'application de la résultante des forces de frottement entre le polissoir et le composant optique.

Ainsi, selon l'invention, l'interaction mal définie entre le polissoir et la surface du composant optique, que l'on rencontrait dans la technique antérieure, est remplacée par une action précise et bien maîtrisée du polissoir sur la surface du composant optique, grâce à l'insensibilité du polissoir aux réactions à son interface avec le composant optique. De plus, grâce au montage du polissoir en pivotement sur les moyens de suspension pneumatique autour d'un point qui coïncide sensiblement avec le point d'application de la résultante des forces de frottement entre le polissoir et le composant optique, les mouvements et déplacements du polissoir sur la surface du composant ne peuvent nuire à l'uniformité de son action sur le composant optique.

Selon une autre caractéristique de l'invention, le procédé comprend une alternance d'opérations élémentaires de polissage effectuées sur des zones déterminées du composant optique et de relevées des défauts de surface du composant dans ces zones et est caractérisé en ce qu'il consiste à retirer au moins 50% de l'amplitude des défauts de surface d'une zone déterminée au cours d'une opération élémentaire de polissage de cette zone.

En pratique, l'efficacité des opérations élémentaires de polissage peut atteindre une valeur de 70 à 80%, ce qui permet d'obtenir, après trois ou quatre opérations élémentaires de polissage, le même résultat et la même précision d'état de surface qu'après 40 opérations de polissage selon la technique antérieure. L'invention permet de diviser par un facteur de l'ordre de dix le nombre des opérations de finition, et donc le nombre des opérations de contrôle.

Selon une autre caractéristique de l'invention, le procédé consiste également à modifier d'une zone à l'autre au moins certains des paramètres définissant les opérations élémentaires de polissage, tels que la force d'appui du polissoir, sa vitesse de rotation, l'amplitude et la vitesse de déplacement de son axe, et la durée de l'opération élémentaire de polissage.

La maîtrise des paramètres de polissage permet en effet de faire varier leurs valeurs d'une zone à l'autre de la surface à polir pour obtenir plus rapidement le résultat recherché.

L'invention propose également un dispositif de polissage d'un composant optique, au moyen d'un polissoir monté sur un support de guidage et de génération de mouvements, comprenant des moyens d'entraînement du polissoir en rotation autour de son axe et des moyens de déplacement de l'axe du polissoir, caractérisé en ce que le support comprend des moyens de suspension pneumatique du polissoir et des moyens de montage du polissoir en pivotement sur ces moyens de suspension pneumatique autour d'un point qui coïncide sensiblement avec le point d'application de la résultante des forces de frottement entre le polissoir et le composant optique.

Selon une autre caractéristique de l'invention, le dispositif comprend des moyens de contrôle et de la réglage de la pression de gaz dans les moyens de suspension pneumatique, réalisant un contrôle et un réglage de la force d'appui du polissoir sur le composant optique.

Selon un mode de réalisation préféré de l'invention, le support comprend un arbre définissant l'axe de rotation du polissoir et sur lequel un plateau est monté coulissant et libre en rotation, et le polissoir est relié à ce plateau par deux paires de lames de flexion disposées en cascade à 90° l'une de l'autre, une première paire de lames de flexion reliant le plateau à une poutre et définissant à leur intersection un axe de rotation, la deuxième paire de lames de flexion reliant la poutre au polissoir et définissant un axe de rotation qui est perpendiculaire à l'axe défini par la première paire de lames et le coupe en un point constituant le point de pivotement du polissoir.

Selon une autre caractéristique de l'invention, le support du polissoir forme le dernier élément articulé d'un bras robot à trois degrés de liberté asservies en position.

L'invention sera mieux comprise et d'autres détails, caractéristiques et avantages de celle-ci apparaîtront au cours de la description explicative qui suit, faite à titre d'exemple en référence aux dessins annexés, dans lesquels :

- La figure 1 représente schématiquement un dispositif de polissage selon l'invention.
- La figure 2 est une vue schématique, à plus grande échelle, du support de polissoir ;
- La figure 3 est une vue schématique en coupe, à plus grande échelle, de la partie inférieure de ce support ;
- La figure 4 est une vue schématique de dessus du support de polissoir de la figure 2 ;
- Les figures 5 et 6 représentent schématiquement les moyens de montage du polissoir sur son support ;
- La figure 7 illustre schématiquement l'action du polissoir sur la surface d'un composant optique.
- La figure 8 représente schématiquement un mode de réalisation d'un bras-robot.

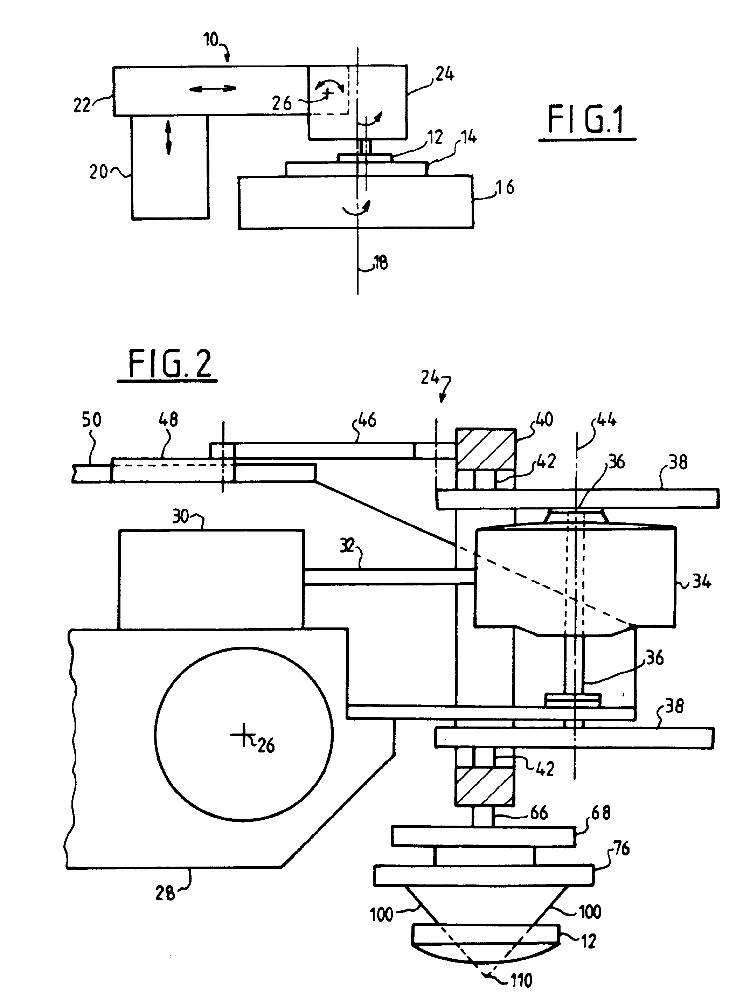

Le dispositif de polissage selon l'invention représenté schématiquement en figure 1 comprend essentiellement un bras-robot 10 à trois degrés de liberté asservis en position, portant un polissoir 12 déplacé sur la surface à polir d'un composant optique 14 monté sur le plateau d'un tour 16 à axe de rotation 18 vertical.

Plus précisément, le bras-robot 10 comprend un élément vertical 20 muni de moyens de déplacement vertical d'un élément horizontal 22, déplaçable horizontalement en translation, et à l'extrémité duquel un troisième élément 24 de support du polissoir 12 est monté à rotation autour d'un axe horizontal transversal 26.

La structure de ce troisième élément du bras-robot 10 est représentée plus en détail, pour une forme de réalisation particulière, dans les figures 2 à 6. Ce troisième élément 24 comprend (figure 2) un châssis 28 monté en rotation autour de l'axe 26 du deuxième élément 22 du bras-robot, et qui porte notamment un moteur électrique 30 dont l'arbre de sortie 32 est relié à un réducteur à engrenage 34 à arbre de sortie creux 36 qui est vertical en figure 2. Cet arbre de sortie 36 est solidaire en rotation de deux bras manivelle 38 parallèles, qui sont horizontaux en figure 2 et qui portent un cadre 40 à contour carré ou rectangulaire, disposé dans un plan vertical en figure 2. Le cadre 40 est monté pivotant autour d'un axe vertical médian sur les bras 38, au moyen de deux articulations appropriées 42 disposées au milieu des côtés horizontaux du cadre 40.

Le réducteur 34, qui supporte les bras 38 et le cadre 40, est lui-même supporté par le châssis 28.

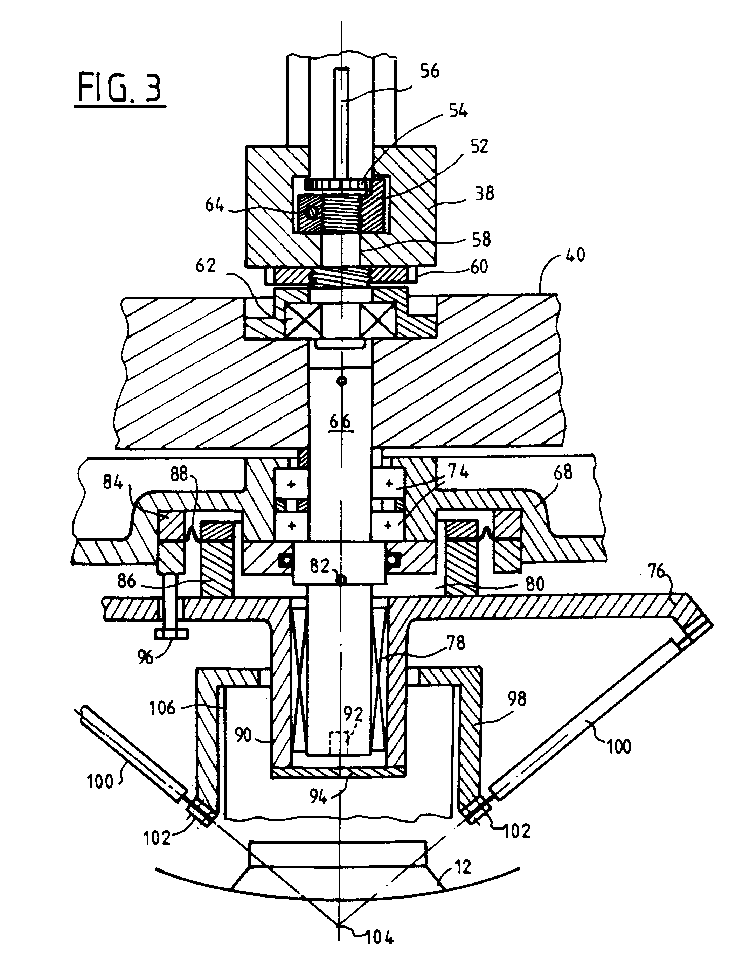

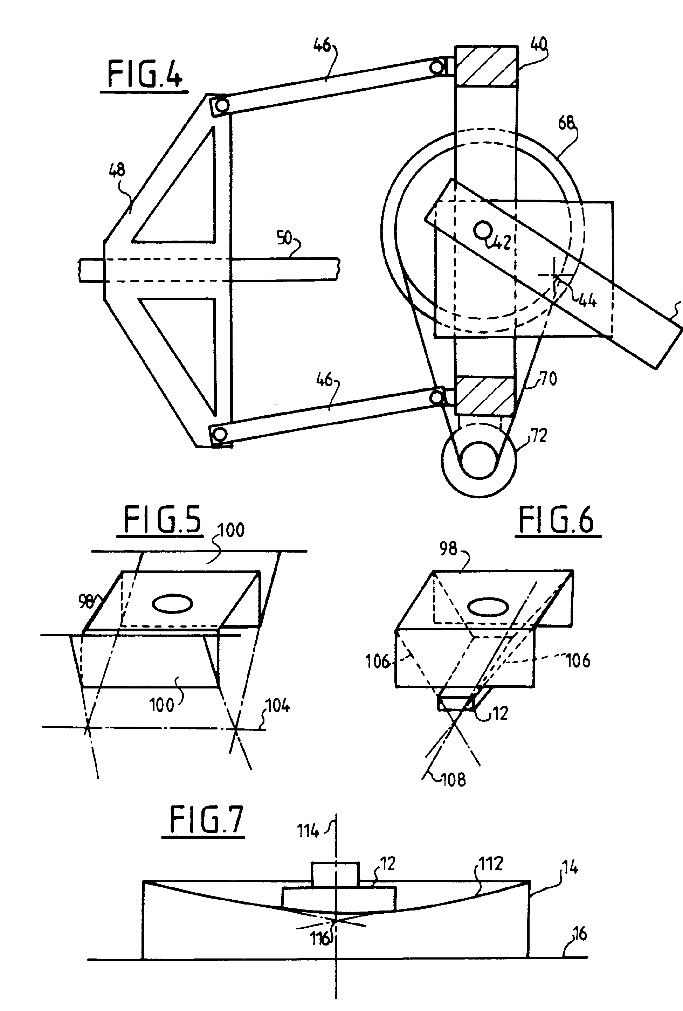

Le cadre 40 est de préférence guidé selon un mouvement de translation circulaire autour de l'axe 44 de l'arbre de sortie 36 du réducteur 34. Pour cela (figures 2 et 4), la partie supérieure du cadre 40 est reliée par deux biellettes articulées 46 parallèles et de même longueur à un chariot 48 monté coulissant sur un rail horizontal 50 porté par le châssis 28. De cette façon, la rotation des bras 38 autour de l'axe 44 des arbres de sortie du réducteur 34 est transformée en mouvement de translation circulaire du cadre 40 (qui reste tout le temps parallèle à lui-même), centré sur l'axe 44. Avantageusement, l'excentration de ce mouvement circulaire, c'est-à-dire la distance entre l'axe 44 et les axes des articulations 42 du cadre 40 sur les bras 38, est réglable, par exemple de la façon suivante : chaque bras 38 contient une crémaillère 52 (figure 3) qui engrène avec une roue dentée 54 reliée par un arbre 56 à la roue dentée 54 correspondante de l'autre bras 38. L'arbre 56 est coaxial à l'arbre 36 du réducteur 34, cet arbre 36 étant tubulaire de façon à ce que l'arbre 56 reliant les deux roues dentées 54 puisse y être logé. Chaque crémaillère 52 est solidaire en translation d'un arbre vertical 58 dont une extrémité filetée est vissée dans un trou fileté de la crémaillère 52, dont une partie intermédiaire filetée reçoit un écrou 60 de blocage sur le bras 38 correspondant, et dont l'extrémité opposée est reliée au côté correspondant du cadre 40 par l'intermédiaire d'une butée à billes ou à rouleaux 62 pour former l'articulation 42 précitée. L'une des crémaillères 52 présente un orifice fileté parallèle à la direction du bras correspondant 38 et dans lequel est engagée une vis 64 de réglage, accessible depuis une extrémité du bras 38. La rotation de la vis 64 dans un sens ou dans l'autre permet de déplacer la crémaillère correspondante 52 dans un sens ou dans l'autre par rapport au bras 38. Ce déplacement de la crémaillère 52 se traduit par une rotation de la roue dentée 54, transmise par l'arbre 56 à la roue dentée 54 associée à la crémaillère 52 de l'autre bras 38. On réalise ainsi un déplacement synchrone des crémaillères 52 dans les bras 38, ce qui permet de régler, en une seule opération, la distance entre l'axe 44 et les articulations 42. En pratique, cette distance est réglable, par exemple, entre 0 et 100 mm.

Le côté horizontal inférieur du cadre 40 est relié par un tronçon d'arbre 66 à une poulie 68 reliée par une courroie crantée 70 à l'arbre de sortie d'un motoréducteur 72 porté par un côté vertical du cadre 40 (figure 4).

La poulie 68, qui est supportée par le tronçon d'arbre 66 et qui est montée libre en rotation sur celui-ci au moyen de paliers 74 (figure 3) est rendue solidaire en rotation, au moyen de lames de couple non représentées, d'un plateau 76 guidé en rotation et en translation, par l'intermédiaire d'une douille à billes 78, sur l'extrémité inférieure du tronçon d'arbre 66.

Le plateau 76 est en outre relié à la poulie 68 par des moyens de suspension pneumatique à raideur sensiblement constante. A cet effet, la poulie 68 et le plateau 76 délimitent entre eux une chambre de fluide 80 reliée à une source de gaz sous pression par l'intermédiaire notamment d'un canal ou passage traversant 82 de l'arbre 66.

Plus précisément, la poulie 68 et le plateau 76 comprennent des rebords cylindriques coaxiaux 84, 86 respectivement qui sont raccordés l'une à l'autre par une membrane annulaire 88 élastiquement déformable, fermant de façon étanche la chambre 80. L'extrémité inférieure de l'arbre 66, logée dans un puits 90 du plateau 76, est munie d'un détecteur de proximité 92, détectant la position du fond 94 du puits 90, correspondant à la venue en butée du plateau 76 sur l'extrémité de l'arbre 66. Ce détecteur permet un réglage en hauteur, pour un fonctionnement à mi-course. Le déplacement du plateau 76 dans l'autre sens en direction verticale est limité par une butée 96 portée par la poulie 68.

Le plateau 76 supporte le polissoir 12, par l'intermédiaire des moyens qui vont maintenant être décrits, en référence aux figures 3, 5 et 6.

Ces moyens comprennent une poutre horizontale 98 à section en U orienté vers le bas, et deux paires de lames de flexion 100, 106 qui sont montées en cascade, une paire de lames 100 reliant le plateau 76 à la poutre, l'autre paire de lames 106 reliant la poutre au polissoir. Pour plus de clarté dans le dessin, on a représenté une paire de lames 100 en figure 5, et l'autre paire de lames 106 en figure 6. Les deux lames de flexion 100 sont opposées et symétriques par rapport à l'axe de l'arbre 66, et chacune est encastrée à ses extrémités sur le plateau 76 et sur l'extrémité inférieure 102 d'une paroi verticale de la poutre 98. Les deux lames 100 sont orientées en oblique de façon à ce que leurs prolongements se coupent selon une ligne 104 qui est perpendiculaire à l'axe de l'arbre 66 et qui est situé sous la poutre 98. Cette ligne 104 constitue un premier axe de rotation de la poutre 98.

Les deux autres lames de flexion 106, du même type que les précédentes, sont solidaires par une extrémité des extrémités longitudinales de la paroi horizontale de la poutre 98 et s'étendent symétriquement en oblique entre les parois verticales de cette poutre, pour être solidaires à leur autre extrémité du polissoir 12. Les prolongements de ces lames de flexion 106 se coupent selon une ligne 108 qui est perpendiculaire à l'axe de l'arbre 66 et à l'axe 104 de rotation de la poutre 98. Cette ligne 108 constitue un second axe de rotation du polissoir 12 par rapport à la poutre 98. En outre, les hauteurs et les inclinaisons de la poutre 98 et des lames de flexion 100 et 106 sont conçues de telle sorte que les axes de rotation 104 et 108 sont coplanaires. Ils se coupent en un point qui constitue un centre virtuel de rotation, équivalent à un joint de cardan, du polissoir 12 par rapport au plateau 76. Ce centre de rotation, désigné par la référence 110 en figure 2, coïncide avec le point d'application de la résultante des forces de frottement du polissoir 12 sur la surface à polir du composant optique 14, comme cela est expliqué ci-dessous en référence à la figure 7.

Dans cette figure, on a représenté schématiquement le polissoir 12 appliqué sur la surface concave 112 à polir du composant optique 14. Le polissoir 12 est de constitution classique, c'est-à-dire qu'il comprend en surface inférieure une plaque usinée avec une courbure égale à celle localement souhaitée pour la surface 112. Cette plaque inférieure est garnie d'un revêtement en une matière permettant la rétention de l'abrasif et présentant une certaine plasticité pour adaptation à la surface à polir.

Quand un tel polissoir est déplacé sur la surface à polir du composant optique, les forces de frottement entre le polissoir et la surface 112 sont en tout point tangentielles à la surface 112 et orientées dans la direction contraire à celle du déplacement du polissoir 12 sur la surface 112. Le point 116 d'application de leur résultante se trouve sur l'axe vertical 114 du polissoir, en dessous de la surface 112, c'est-à-dire du côté convexe de l'interface et à l'intérieur du composant optique. Comme indiqué plus haut, le centre virtuel de rotation 110 du polissoir sur son support coïncide avec ce point 116. Il en résulte que, lorsque le polissoir 12 est déplacé sur la surface 112 à polir, ce déplacement ne crée aucun moment de basculement du polissoir et donc ne modifie nullement la répartition des efforts normaux et tangentiels du polissoir 12 sur la surface à polir, contrairement à ce qui se passerait si le polissoir 12 était monté sur son support par l'intermédiaire d'une rotule mécanique réelle dont le centre serait nécessairement situé du côté concave de l'interface et donc écarté du point 116, d'où il résulterait un couple de basculement du polissoir 12, entre la force de déplacement appliquée au centre de la rotule et la résultante des efforts de frottement appliquée au point 116, et une modification non contrôlable de l'action du polissoir sur la surface à polir.

Lorsque la surface à polir du composant optique est convexe, le point d'application de la résultante des forces de frottement entre le polissoir et la surface à polir se trouve au-dessus de la surface à polir, et le polissoir est alors conçu pour que son centre virtuel de rotation se trouve également en ce point.

De façon générale, le polissage selon l'invention d'un composant optique est réalisé de la façon suivante.

Les moyens de suspension pneumatique du plateau 76 portant le polissoir 12 permettent, au moyen d'un régulateur pneumatique et d'un système d'asservissement, de contrôler la pression de gaz dans la chambre 80. Une dépression dans cette chambre permet d'alléger ou de soulever le polissoir, pour le déplacer d'une zone à une autre de la surface à polir. Inversement, une pression supérieure à la pression atmosphérique dans la chambre 80 augmente la force d'appui du polissoir sur la surface à polir.

Le montage du polissoir sur le plateau 76 par l'intermédiaire d'un centre virtuel de rotation qui coïncide avec le point d'application de la résultante des forces de frottement du polissoir sur la surface à polir, permet de déplacer le polissoir sur cette surface en conservant une répartition uniforme de l'action du polissoir sur la surface du composant optique, cette action étant due à la force d'appui du polissoir et à ses mouvements sur cette surface.

La suspension pneumatique du plateau 76 par rapport à la poulie 68 présente en outre l'avantage de ne pas transmettre au polissoir les vibrations axiales de la poulie. Les trois degrés de liberté des éléments du bras-robot (translation verticale, translation horizontale et inclinaison autour de l'axe 26) permettent de déterminer la zone de la surface du composant optique qui va être soumise à une opération de polissage. La vitesse de rotation du cadre 40 autour de l'axe 44 du réducteur 34, la valeur de l'excentration, la vitesse de rotation du plateau 76 autour de l'axe de la poulie 68, la pression d'appui du polissoir 12 sur la surface du composant optique, le type d'abrasif utilisé, la rotation du composant optique 14 autour de son axe de révolution, et la durée constituent les autres paramètres d'un opération de polissage. La maîtrise de ces paramètres et leur quantification d'une part, et la connaissance précise de la localisation et de l'amplitude des défauts de surface à corriger permettent de réaliser des opérations élémentaires de polissage ayant une efficacité de l'ordre de 70 à 80 % sans risque de dépassement de la cote souhaitée. Il en résulte que, par rapport à la technique antérieure, le nombre des opérations élémentaires de polissage nécessaires pour obtenir un état de surface avec une précision déterminée, par exemple de l'ordre du 1/8 de la longueur d'onde de la lumière, est divisé par un facteur de l'ordre de 10. La localisation des défauts de surface et la mesure de leur amplitude sont réalisables à l'aide d'équipements disponibles sur le marché, tels que celui commercialisé sous la marque ZYGO et qui peuvent être couplés à un micro-ordinateur. Il en résulte une automatisation programmable des opérations de polissage, basée sur le principe suivant:

- Relevé cartographique précis des défauts de surface de composant
- Transmission de ce relevé au micro-ordinateur
- Eventuellement, visualisation de ces défauts de surface à l'attention d'un opérateur,
- Choix de l'outil et de l'abrasif appropriés à l'enlèvement des défauts par excès mesurés
- Programmation des déplacements de l'outil permettant de corriger la plus grosse part de ces défauts, détermination prévisionnelle des résultats attendus, et mise au point du programme,
- Exécution du polissage,
- Nouveau relevé cartographique des défauts de surface du composant.

Contrairement à la technique antérieure, l'invention permet le polissage de la surface d'un composant optique en procédant plage par plage, sans que ces plages soient nécessairement des zones sphériques. L'utilisation du tour 16 entraînant le composant optique en rotation autour de son axe de révolution permet de passer d'une plage à l'autre.

Eventuellement, la rotation continue du tour permet de limiter le travail de l'outil au polissage de zones sphériques ou de calottes sphériques.

Corollairement, il en découle que l'invention s'applique également au polissage de surfaces qui ne sont pas des surfaces de révolution.

On notera enfin que tous les mouvements du polissoir et du bras-robot, ainsi que la rotation du composant optique autour de son axe de révolution sont asservis en position afin d'éviter un couplage harmonique entre les divers mouvements et garantir qu'aucun point du polissoir ne repassera cycliquement sur les mêmes points de la surface à polir.

A titre d'exemple, les caractéristiques d'un dispositif de polissage selon l'invention peuvent être les suivantes :
Déplacement vertical du premier élément du bras-robot : 200 mm
Déplacement horizontal du second élément du bras-robt : 1000 mm
Angle d'inclinaison autour de l'axe 26, par rapport à la verticale : 0 à 30°
Vitesse de déplacement par rapport à ces trois axes : environ 1/10è de la course en une seconde
Vitesse de rotation du polissoir autour de son axe : 2 tours par minute environ
Excentration du mouvement de translation circulaire du cadre 40 : de 0 à 100 mm environ
Force d'appui du polissoir sur la surface du composant : de 0 à quelques dizaines de kg.

Un tel dispositif permet par exemple le polissage de composants de moyenne et grande taille (diamètres allant de 600 mm à 2 m environ).

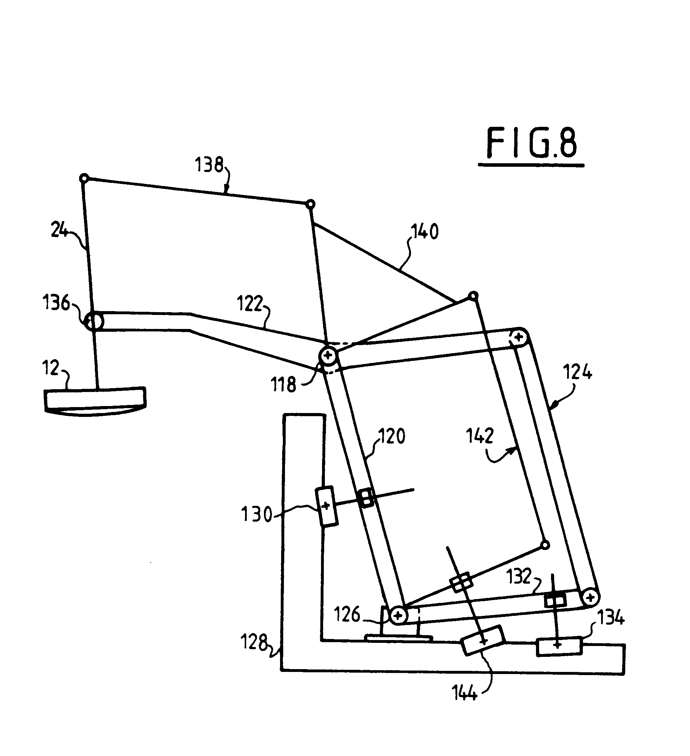

La structure du bras-robot est par exemple celle représentée en figure 8. Dans cet exemple, les trois éléments du bras-robot sont montés pivotants autour d'axes horizontaux et font partie de parallélogrammes déformables. Le premier élément 120 et le deuxième élément 122 du bras-robot sont articulés l'un sur l'autre autour d'un axe 118 et font partie d'un même parallélogramme 124 articulé en 126 sur un bâti fixe 128.

Le premier élément 120 est entraîné autour de l'axe 126 par un moteur 130. Un troisième côté 132 du parallélogramme, parallèle à l'élément 122, est entraîné autour de l'axe 126 par un moteur 134 et fait tourner l'élément 122 autour de l'axe 118. Le troisième élément du bras-robot, qui est le support 24 du polissoir 12, est articulé en 136 sur l'extrémité du deuxième élément 122, et fait partie d'un parallélogramme 138 relié, par un triangle indéformable 140 articulé en 118 et un parallélogramme 142 articulé en 126, à un moteur 144 monté sur la bâti fixe, à la base du bras-robot.

Les rotations combinées du premier élément 120 autour de l'axe 126 et du deuxième élément 122 autour de l'axe 118 permettent à l'extrémité du deuxième élément d'être placée en tout point voulu dans le plan du dessin par rapport à la surface d'un composant à polir. La rotation du support 24 autour de l'axe 136 détermine l'orientation de l'axe du polissoir par rapport à la surface à polir.

## Revendications

1. Procédé de polissage d'un composant optique, au moyen d'un polissoir (12) monté sur un support (24) de guidage et de génération de mouvement, pour entraîner le polissoir en rotation autour de son axe (114), et pour déplacer l'axe de rotation du polissoir, caractérisé en ce que, pour rendre le polissoir et son support insensibles aux réactions perturbatrices à l'interface entre le polissoir et le composant optique et uniformiser l'action du polissoir sur le composant optique, il consiste à relier le polissoir (12) au support (24) par des moyens (68, 76, 80) de suspension pneumatique et à monter le polissoir (12) en pivotement sur ces moyens de suspension autour d'un point (110) qui coïncide sensiblement avec le point d'application de la résultante des forces de frottement entre le polissoir et le composant optique.

2. Procédé selon la revendication 1, comprenant une alternance d'opérations élémentaires de polissage effectuées sur des zones déterminées du composant optique et de relevés des défauts de surface du composant dans ces zones, caractérisé en ce qu'il consiste à retirer au moins 50% de l'amplitude des défauts de surface d'une zone déterminée au cours d'une opération élémentaire de polissage de cette zone.

3. Procédé selon la revendication 2, caractérisé en ce qu'il consiste à modifier d'une zone à l'autre au moins certains des paramètres définissant les opérations élémentaires de polissage, tels que la force d'appui du polissoir, sa vitesse de rotation, l'amplitude et la vitesse de déplacement de son axe, et la durée de l'opération élémentaire de polissage.

4. Procédé selon l'une des revendications précédentes, caractérisé en ce qu'il consiste à régler la force d'appui du polissoir (12) sur le composant optique par contrôle et réglage de la pression de gaz dans les moyens (68, 76, 80) de suspension pneumatique.

5. Dispositif de polissage d'un composant optique, au moyen d'un polissoir (12) monté sur un support (24) de guidage et de génération de mouvements, comprenant des moyens (68, 70, 72) d'entraînement du polissoir (12) en rotation autour de son axe (114) et des moyens de déplacement de l'axe du polissoir, caractérisé en ce que le support (24) comprend des moyens (68, 76, 80) de suspension pneumatique du polissoir, et des moyens de montage du polissoir en pivotement sur ces moyens de suspension pneumatique autour d'un point (110) qui coïncide sensiblement avec le point d'application de la résultante des forces de frottement entre le polissoir et le composant optique.

6.  Dispositif selon la revendication 5, caractérisé en ce qu'il comprend des moyens de contrôle et de réglage de la pression de gaz dans les moyens de suspension pneumatique, réalisant un contrôle et un réglage de la force d'appui du polissoir sur le composant optique.

7.  Dispositif selon la revendication 5 ou 6, caractérisé en ce que le support (24) comprend un arbre (66) définissant l'axe de rotation du polissoir (12) et sur lequel un plateau (76) est monté coulissant et libre en rotation, et en ce que le polissoir (12) est relié à ce plateau (76) par deux paires de lames de flexion (100, 106) disposées en cascade à 90° l'une de l'autre, une première paire de lames de flexion (100) reliant le plateau (76) à une poutre (98) et définissant à leur intersection un axe de rotation (104), la deuxième paire de lames de flexion (106) reliant la poutre (98) au polissoir (12) et définissant un axe de rotation (108) qui est perpendiculaire à l'axe (104) défini par la première paire de lames et le coupe en un point (110) constituant le point de pivotement du polissoir.

8.  Dispositif selon la revendication 7, caractérisé en ce qu'une poulie (68) portée par l'arbre (66) et solidaire en rotation du plateau (76) est reliée par une courroie (70) à un moteur (72) d'entraînement du polissoir en rotation autour de son axe.

9.  Dispositif selon la revendication 8, caractérisé en ce que le plateau (76) et la poulie (68) sont reliés par une membrane annulaire (88) délimitant entre eux une chambre étanche (80) raccordée à une source de gaz sous pression pour constituer les moyens précités de suspension pneumatique du polissoir.

10. Dispositif selon l'une des revendications 7 à 9, caractérisé en ce que l'arbre (66) définissant l'axe de rotation du polissoir est porté par un cadre (40) guidé en translation circulaire autour d'un axe (44) du support (24), de façon à rester parallèle à lui-même, au moyen d'un système bielle-manivelle (36, 38, 42) à excentration réglable.

11. Dispositif selon l'une des revendications 5 à 10, caractérisé en ce que le support (24) forme le dernier élément articulé d'un bras robot (10) à trois degrés de liberté asservis en position.

12. Dispositif selon l'une des revendications 5 à 11, caractérisé par des moyens d'asservissement en position des mouvements du polissoir, de son support (24) et d'un plateau de tour (16) portant le composant optique.

13. Dispositif selon l'une des revendications 5 à 12, caractérisé en ce qu'il comprend un bras robot articulé, dont un premier élément (120) est monté à rotation autour d'un axe horizontal (126) sur un bâti fixe (128), dont un deuxième élément (122) est monté à rotation sur le premier autour d'un axe (118) parallèle à l'axe de rotation de ce premier élément, et dont un troisième élément est monté à rotation sur le deuxième autour d'un axe parallèle aux deux axes précités et forme le support (24) du polissoir (12).

14. Dispositif selon la revendication 13, caractérisé en ce que les premier, deuxième et troisième éléments (120, 122, 24) du bras robot sont des côtés de parallélogrammes déformables (124, 138, 142) dont deux sont articulés autour du même axe horizontal (126) sur le bâti fixe (128).

**Patentansprüche**

1.  Verfahren zum Polieren eines optischen Gegenstandes, mit mindestens einem Polierwerkzeug (12), das an einer Halterung (24) zur Führung und Erzeugung von Bewegung befestigt ist, um das Polierwerkzeug um dessen eigene Achse (114) in Drehung zu versetzen und die Rotationsachse des Polierwerkzeuges zu verschieben, **dadurch gekennzeichnet, daß** es aus dem Verbinden des Polierwerkzeuges (12) mit der Halterung durch pneumatische Aufhängungsmittel (68, 76, 80) und dem schwenkbaren Befestigen des Polierwerkzeuges (12) an diesen Aufhängungsmitteln um einen Punkt (110) besteht, der im wesentlichen mit dem Punkt zusammenfällt, an dem die Resultierende der Reibungskräfte zwischen dem Polierwerkzeug und dem optischen Gegenstand angreift, um das Polierwerkzeug und dessen Halterung auf störende Rückwirkungen an der Grenzfläche zwischen dem Polierwerkzeug und dem optischen Gegenstand unempfindlich zu machen und die Wirkung des Polierwerkzeuges an dem optischen Gegenstand gleichmäßig zu gestalten.

2. Verfahren nach Anspruch 1, das ein Ändern der elementaren Poliervorgänge in bestimmten Zonen des optischen Gegenstandes und das Beseitigen von Fehlern an der Oberfläche in den Zonen des Gegenstandes aufweist, **dadurch gekennzeichnet, daß** die Größe von Fehlern in einer bestimmten Zone an der Oberfläche im Laufe eines elementaren Poliervorganges an diesen Zonen um mindestens 50% herabgesetzt wird.

3. Verfahren nach Anspruch 2, **dadurch gekennzeichnet, daß** es das Verändern zumindest gewisser Parameter von einer Zone zur anderen aufweist, die den elementaren Poliervorgang festlegen, wie die Anpreßkraft des Polierwerkzeuges, seine Rotationsgeschwindigkeit, die Größe und die Geschwindigkeit der Verschiebung seiner Achse und die Dauer des elementaren Poliervorganges.

4. Verfahren nach einem der vorigen Ansprüche, **dadurch gekennzeichnet, daß** es das Regeln der Anpreßkraft des Polierwerkzeuges (12) auf den optischen Gegenstand durch Steuern und Regeln des Gasdruckes in den Mitteln (68, 76, 80) zur pneumatischen Aufhängung aufweist.

5. Vorrichtung zum Polieren eines optischen Gegenstandes mit mindestens einem Polierwerkzeug (12), das an einer Halterung (24) zur Führung und Erzeugung von Bewegungen befestigt ist, die Mittel (68, 70, 72), um das Polierwerkzeug (12) um seine eigene Achse (114) in Drehung zu versetzen, und Mittel aufweist, um die Rotationsachse des Polierwerkzeuges zu verschieben, **dadurch gekennzeichnet, daß** die Halterung (24) Mittel (68, 76, 80) zur pneumatischen Aufhängung des Polierwerkzeuges und Mittel zum schwenkbaren Befestigen des Polierwerkzeuges an diesen pneumatischen Aufhängungsmitteln um einen Punkt ( 110 ) aufweist, der im wesentlichen mit dem Punkt zusammenfällt, an dem die Resultierende der Reibungskräfte zwischen dem Polierwerkzeug und dem optischen Gegenstand angreift.

6. Vorrichtung nach Anspruch 5, **dadurch gekennzeichnet, daß** sie Mittel zum Steuern und Regeln des Gasdruckes in den pneumatischen Aufhängungsmitteln aufweist, die eine Steuerung und eine Regelung der Anpreßkraft des Polierwerkzeuges auf den optischen Gegenstand realisiert.

7. Verfahren nach Anspruch 5 oder 6, **dadurch gekennzeichnet, daß** die Halterung (24) eine Welle (66) aufweist, welche die Rotationsachse des Polierwerkzeuges (12) festlegt und an welcher eine Platte (76) verschiebbar und frei drehbar befestigt ist und daß das Polierwerkzeug (12) mit dieser Platte (76) über zwei Paar sich durchbiegender Platten (100, 106) verbunden ist, die kaskadenartig zueinander unter einem Winkel von 90° angeordnet sind, wobei ein erstes Paar sich durchbiegender Platten (100) die Platte (76) mit einem Träger (98) verbindet und an ihrem Schnittpunkt eine Rotationsachse (104) festlegt, das zweite Paar sich durchbiegender Platten (106) den Träger (98) mit dem Polierwerkzeug (12) verbindet und eine Rotationsachse (108) festlegt, die normal auf die durch das erste Paar sich durchbiegender Platten festgelegten Achse (104) steht, und der Schnittpunkt (110) den Drehpunkt des Polierwerkzeuges bildet.

8. Vorrichtung nach Anspruch 7, **dadurch gekennzeichnet, daß** eine von der Welle (66) gehaltene und mit der Platte (76) drehbar verbundene Rolle (68) mittels eines Riemens (70) mit einem Motor verbunden ist, um das Polierwerkzeug um seine Achse in Drehung zu versetzen.

9. Verfahren nach Anspruch 8, **dadurch gekennzeichnet, daß** die Platte (76) und die Rolle (68) mit einer ringförmigen Membran (88) verbunden sind, die zwischen ihnen eine dichte Kammer (80) abtrennt, welche mit einer quelle von unter Druck stehendem Gas verbunden ist, um die vorhin genannten Mittel zur pneumatischen Aufhängung des Polierwerkzeuges zu bilden.

10. Vorrichtung nach einem der Ansprüche 7 bis 9, **dadurch gekennzeichnet, daß** die Welle (66), welche die Rotationsachse des Polierwerkzeuges festlegt, von einem Führungsrahmen (40) zu einer solchen kreisförmigen Bewegung um eine Achse (44) der Halterung (24) gehalten wird, daß zumindest ein Kurbelstangensystem (36, 38 42) mit einstellbarer Exzentrizität dazu parallel bleibt.

11. Vorrichtung nach einem der Ansprüche 5 bis 10, **dadurch gekennzeichnet, daß** die Halterung (24) das letzte Element bildet, das mittels eines Roboterarms (10) mit 3 Freiheitsgraden positionsgesteuert bewegt wird.

12. Vorrichtung nach einem der Ansprüche 5 bis 11, **gekennzeichnet durch** Mittel zur Positionssteuerung der Bewegung des Polierwerkzeuges, seiner Halterung (24) und einer drehbaren Platte (16), die den optischen Gegenstand trägt.

13. Vorrichtung nach einem der Ansprüche 5 bis 12, **dadurch gekennzeichnet, daß** sie einen gelenkigen Roboterarm aufweist, bei dem ein erstes Element (120) drehbar um eine horizontale Achse (126) an einem fixierten Gestell (128) angebracht ist, bei dem ein zweites Element (122) an dem ersten, drehbar um eine zu der Rotationsachse dieses ersten Elementes parallelen Achse (118) angebracht ist und bei dem ein drittes Element an dem zweiten, drehbar um eine zu den zwei vorgenannten Achsen parallele Achse angebracht ist und die Halterung (24) für das Polierwerkzeug (12) bildet.

14. Vorrichtung nach Anspruch 13, **dadurch gekennzeichnet, daß** das erste, zweite und dritte Element (120, 122, 124) des Roboterarmes die Begrenzungen eines deformierbaren Parallelogrammes (124, 138, 142) bilden, von denen zwei um die selbe horizontale Achse (126) mit dem fixierten Gestell (128) gelenkig verbunden sind.

## Claims

1. A method of polishing an optical component by means of a polisher (12) mounted on a motion-generating and guiding support (24) for driving the polisher in rotation about its axis (114), and for displacing the axis of rotation of the polisher, the method being characterized in that in order to make the polisher and its support insensitive to the disturbing reactions at the interface between. the polisher and the optical component and in order to make the action of the polisher on the optical component uniform, the method consists in connecting the polisher (12) to the support (24) by pneumatic suspension means (68, 76, 80) and in mounting the polisher (12) to pivot on said suspension means about a point (110) which coincides substantially with the point of application of the resultant of the friction forces between the polisher and the optical component.

2. A method according to claim 1, comprising alternating elementary operations of polishing performed on determined areas of the optical component and of measuring surface defects of the components in said areas, the method being characterized in that it consists in removing at least 50% of the amplitude of the surface defects in a determined area during an elementary polishing operation of said area.

3. A method according to claim 2, characterized in that it consists in modifying from one area to another at least some of the parameters defining the elementary polishing operations, such as thrust force of the polisher, its speed of rotation, the amplitude and speed of the displacement of its axis, and the duration of the elementary polishing operation.

4. A method according to any preceding claim, characterized in that it consists in adjusting the thrust force of the polisher (12) on the optical component by monitoring and adjusting the pressure of the gas in the pneumatic suspension means (68, 76, 80).

5. Apparatus for polishing an optical component by means of a polisher (12) mounted on a motion-generating and guiding support (24), the apparatus comprising means (68, 70, 72) for driving the polisher (12) to rotate about its axis (114), and means for displacing the axis of the polisher, the apparatus being characterized in that the support (24) includes pneumatic suspension means (68, 76, 80) for the polisher, and means for pivotally mounting the polisher on the pneumatic suspension means to pivot about a point (110) that substantially coincides with the point of application of the resultant of the friction forces between the polisher and the optical component.

6. Apparatus according to claim 5, characterized in that it includes means for monitoring and adjusting the pressure of the gas in the pneumatic suspension means, thereby monitoring and adjusting the thrust force of the polisher against the optical component.

7. Apparatus according to claim 5 or 6, characterized in that the support (24) includes a shaft (66) defining the axis of rotation of the polisher (12) and on which a turntable (76) is mounted so as to be free to slide and to rotate, and in that the polisher (12) is connected to the turntable (76) by two pairs of flexible blades (100, 106) disposed in cascade at 90° to one another, a first pair of flexible blades (100) connecting the turntable (76) to a beam (98) and defining an axis of rotation (104) at their intersection, the second pair of flexible blades (106) connecting the beam (98) to the polisher (12) and defining an axis of rotation (108) which is perpendicular to the axis (104) defined by the first pair of blades and which intersects it at a point (110) forming the pivot point of the polisher.

8. Apparatus according to claim 7, characterized in that a pulley (68) carried by the shaft (66) and constrained to rotate with the turntable (76) is connected by a belt (70) to a motor (72) for driving the polisher in rotation about its axis.

9. Apparatus according to claim 8, characterized in that the turntable (76) and the pulley (68) are connected by an annular membrane (88) delimiting between them a sealed chamber (80) connected to a source of gas under pressure to constitute the above-mentioned pneumatic suspension means of the polisher.

10. Apparatus according to any one of claims 7 to 9, characterized in that the shaft (66) defining the axis of rotation of the polisher is carried by a frame (40) guided in circular translation around an axis (44) of the support (24) so as to remain parallel to itself, by means of a crank and connecting rod system (36, 38, 42) of adjustable eccentricity.

11. Apparatus according to any one of claims 5 to 10, characterized in that the support (24) form the last hinged element of a robot arm (10) having 3° of freedom and servo-controlled in position.

12. Apparatus according to any one of claims 5 to 11, characterized by position servo-control means for controlling the motion of the polisher, of its support (24) and of a lathe turntable (16) carrying the optical component.

13. Apparatus according to any one of claims 5 to 12, characterized in that it includes an articulated robot arm whose first element (120) is mounted to rotate about a horizontal axis (126) on a fixed stand (128), whose second element (122) is mounted to rotate on the first about an axis (118) parallel to the axis of rotation of said first element, and whose third element is mounted to rotate on the second about an axis parallel to both of said axes and forms the support (24) of the polisher (12).

14. Apparatus according to claim 13, characterized in that the first, second, and third elements (120, 122, 24) of the robot arm constitute the sides of deformable parallelograms (124, 138, 142) two of which are hinged about a common horizontal axis (126) on the fixed stand (128).

FIG.1

FIG.2

FIG. 3

FIG.4

FIG.5

FIG.6

FIG.7

FIG.8